Europäisches Patentamt

European Patent Office

Office européen des brevets

(19)

(11) **EP 0 753 831 B1**

(12) **FASCICULE DE BREVET EUROPEEN**

(45) Date de publication et mention
de la délivrance du brevet:
**10.01.2001 Bulletin 2001/02**

(51) Int Cl.⁷: **G06T 9/00**

(21) Numéro de dépôt: **96460024.1**

(22) Date de dépôt: **08.07.1996**

(54) **Méthode modifiée de leaky-bucket**

Modifiziertes Leaky-Bucketverfahren

Modified leaky-bucket method

(84) Etats contractants désignés:
**DE GB IT NL SE**

(30) Priorité: **10.07.1995 FR 9508581**

(43) Date de publication de la demande:
**15.01.1997 Bulletin 1997/03**

(73) Titulaire: **FRANCE TELECOM**
**75015 Paris (FR)**

(72) Inventeurs:
• **Hamdi, Maher**
**35700 Rennes (FR)**
• **Rolin, Pierre**
**35510 Cesson-Sevigne (FR)**
• **Roberts, James**
**78960 Voisins le Bretonneux (FR)**

(74) Mandataire: **Maillet, Alain**
**SCP Le Guen & Maillet,**
**5, Place Newquay,**
**B.P. 70250**
**35802 Dinard Cedex (FR)**

(56) Documents cités:
• **PROCEEDINGS. IEEE INFOCOM '95. THE CONFERENCE ON COMPUTER COMMUNICATIONS. FOURTEENTH ANNUAL JOINT CONFERENCE OF THE IEEE COMPUTER AND COMMUNICATIONS SOCIETIES. BRINGING INFORMATION TO PEOPLE (CAT. NO.95CH35759), PROCEEDINGS OF INFOCOM'95, BOSTON, MA,, ISBN 0-8186-6990-X, 1995, LOS ALAMITOS, CA, USA, IEEE COMPUT. SOC. PRESS, USA, pages 796-803 vol.2, XP000560183 PANCHA P ET AL: "Leaky bucket access control for VBR MPEG video"**
• **IEEE/ACM TRANSACTIONS ON NETWORKING, JUNE 1995, USA, vol. 3, no. 3, ISSN 1063-6692, pages 329-339, XP002014796 REIBMAN A R ET AL: "Traffic descriptors for VBR video teleconferencing over ATM networks"**
• **IEEE/ACM TRANSACTIONS ON NETWORKING, APRIL 1994, USA, vol. 2, no. 2, ISSN 1063-6692, pages 176-180, XP002014797 LUCANTONI D M ET AL: "Methods for performance evaluation of VBR video traffic models"**
• **IEEE TRANSACTIONS ON CIRCUITS AND SYSTEMS FOR VIDEO TECHNOLOGY, DEC. 1992, USA, vol. 2, no. 4, ISSN 1051-8215, pages 361-372, XP000323661 REIBMAN A R ET AL: "Constraints on variable bit-rate video for ATM networks"**

## Description

La présente invention concerne un procédé de contrôle du débit de sortie d'un codeur de données numériques représentatives de séquences d'images. Le domaine de l'invention est celui des applications multimédia, et en particulier les applications de transmission sur des réseaux à haut débit du type ATM d'images animées, compressées, par exemple selon un algorithme défini dans la norme dite Mpeg-2, mémorisées ou en temps réel.

La compression vidéo se base sur l'exploitation de la redondance d'informations qui caractérise les images animées. Deux formes de redondance d'informations sont présentes: spatiale et temporelle. La redondance spatiale est celle qui existe au sein de la même image et est le fait que les pixels voisins de l'image ont tendance à avoir des valeurs de luminance et/ou de chrominance très proches. Quant à la redondance temporelle, elle existe entre des images successives et est le fait que les pixels ayant la même position dans deux images voisines ont tendance à avoir des valeurs de luminance et/ou de chrominance très proches.

Dans la suite de la description, on appellera activité spatiale ou complexité spatiale une grandeur qui est directement liée à la corrélation spatiale. Lorsque la complexité spatiale sera grande, la corrélation sera faible et inversement. La compression vidéo consiste précisément à utiliser des techniques de codage qui exploitent des redondances pour produire une quantité de données qui est inférieure à celle du signal vidéo brut.

De nombreux travaux de recherche ont abouti à des algorithmes de compression de l'image dont les propriétés sont significativement différentes. Néanmoins, dans tous les cas, une image compressée est arrangée en un bloc structuré de taille plus ou moins importante variable d'une image à l'autre.

La réduction de la redondance spatiale se fait essentiellement lors de l'étape de quantification. Après avoir effectué une transformée en cosinus discrète sur chaque bloc d'une image, les coefficients obtenus sont divisés par des valeurs entières données par la matrice de quantification. Cette division entière a pour but d'augmenter le nombre de valeurs nulles qui ne seront pas représentées après un codage de Huffman. A cause de cette division entière, cette opération introduit une erreur dans les valeurs restituées. Pour effectuer une compression plus ou moins forte, la matrice de quantification est pondérée par un coefficient appelé paramètre de quantification (généralement noté Q). Plus la valeur de ce paramètre est grande, plus le gain de réduction est important et vice-versa. Ainsi, l'impact du paramètre de quantification sur la dégradation visuelle de l'image restituée dépend de la complexité spatiale de l'image. Autrement dit, pour avoir une qualité visuelle équivalente, le paramètre de quantification utilisé lors de la compression d'une image contenant un grand nombre de petits détails est plus petit que celui utilisé pour la compression d'une image plutôt uniforme.

De même, pour avoir un débit constant, le paramètre de quantification utilisé lors de la compression d'une image contenant un grand nombre de petits détails est plus grand que celui utilisé pour la compression d'une image plutôt uniforme.

Enfin, la compression d'une image de forte complexité spatiale ou de grande activité spatiale produit, pour un paramètre de quantification Q de valeur constante, plus de données que la compression d'une image de faible complexité spatiale.

La technique utilisée pour la réduction de la redondance temporelle est l'estimation et la compensation de mouvement. Il s'agit de déterminer la position de chaque bloc ou macrobloc d'une image dans l'image suivante. La taille de la fenêtre de recherche dans l'image suivante est limitée du fait de la complexité de calcul. Si le macrobloc cherché est trouvé dans la fenêtre de recherche, on définit un vecteur de déplacement qui décrit le mouvement du macrobloc. C'est l'estimation de mouvement.

Généralement, le macrobloc trouvé n'est pas exactement identique au macrobloc original mais diffère, pour quelques pixels, d'une erreur. Une correction de cette erreur est alors effectuée en codant la différence pixel par pixel entre les deux macroblocs. C'est la compensation de mouvement.

Si le macrobloc n'est pas trouvé dans la fenêtre de recherche, il est alors codé par transformée et quantification comme cela a déjà été décrit ci-dessus.

Ainsi, si la complexité temporelle est forte, c'est-à-dire si le mouvement des macroblocs d'une image à l'autre est important, par exemple lors de changements de scènes, de zooms rapides de la caméra, etc., l'estimation des vecteurs de mouvement échoue et une grande quantité de données est générée pour le codage de la scène.

Une scène est une suite d'images ayant plus ou moins le même contenu à l'intérieur d'une séquence vidéo. Il s'agit, par exemple d'une personne qui parle devant un fond fixe ou d'un plan fixe.

On appellera, dans la suite de la description, une scène active une scène qui montre une grande complexité spatiale et temporelle et donc qui demande pour être transmise un débit plus grand que le débit moyen pour la transmission de la séquence vidéo entière. A l'inverse, on appellera une scène peu active une scène qui présente une faible complexité spatiale et temporelle, c'est-à-dire dont le débit nécessaire de transmission est inférieur au débit moyen de transmission de la séquence vidéo entière.

Le débit est ici la quantité de données transmises par unité de temps.

Afin de pouvoir transmettre leurs informations sur des services réseau à débit constant, les algorithmes de compression intègrent en général des mécanismes pour maintenir le débit quasiment constant en sortie du codeur.

Les réseaux qui utilisent la technique de commutation asynchrone ATM ont été conçus pour pouvoir transmettre des trafics de différents types à des qualités de service différentes. Ils sont basés sur la transmission de cellules de petites tailles de 48 octets de données et de 5 octets d'entête. En principe, de tels réseaux permettent des connexions à débit variable dans le temps.

Pour la transmission de données d'images compressées, le fait d'autoriser la variation du débit à la sortie du codeur permet de mieux s'adapter à la complexité de l'image, qui est de nature variable et donc d'avoir une qualité visuelle meilleure que les codages à débit constant.

Le domaine d'application de l'invention est donc celui du codage de données d'image à débit variable.

On appelle qualité de service l'aptitude d'un réseau à respecter les contraintes, en termes de pertes de données et de délai de transfert, de ces applications de transmission d'images. Par exemple, l'accès au réseau large bande est basé sur le principe d'un contrat de trafic et de la garantie de la qualité de service. La conception du réseau nécessite donc des mécanismes de gestion et d'allocation de ressources adaptés à chaque type de trafic, ce qui passe par la définition de descripteurs de trafic qui permettent au réseau de prévoir les ressources nécessaires pour garantir la qualité de service requise. Durant la connexion, le réseau effectue un contrôle continu sur le trafic émis par le codeur vidéo pour vérifier sa conformité aux descripteurs annoncés par le contrat de trafic. Lorsque l'utilisateur excède son contrat de trafic les cellules excédentaires peuvent être rejetées.

A part le débit crête, deux paramètres sont actuellement proposés comme partie du descripteur du trafic à débit variable: le débit maintenu ou *Sustainable Cell Rate* (SCR) et la tolérance de gigue ou *Burst Tolerance* (BT). Un mécanisme précis et normalisé, l'algorithme dit GCRA basé sur le mécanisme dit du *leaky bucket* ou seau percé permet de contrôler ces paramètres. La conformité à ces paramètres est équivalente à la conformité au *leaky bucket* correspondant. Les deux paramètres SCR et BT correspondent aux deux paramètres du seau percé. Il est donc important qu'il existe un mécanisme de contrôle dans le codeur pour surveiller et éventuellement limiter le débit en sortie du codeur afin de rester conforme au contrat de trafic sans qu'il y ait pertes d'informations.

Dans le cas où le réseau utilisé pour le transport du flux compressé offre des connexions à débit constant, un algorithme de contrôle de débit doit être utilisé pour assurer que le débit de sortie du codeur reste constant. Cette technique consiste faire varier le paramètre de quantification Q, d'une image à l'autre et au sein de la même image pour satisfaire la contrainte de débit constant. Le principe utilisé dans ce type d'algorithme est de maintenir, entre le codeur et le canal réseau, un tampon dans lequel sont stockées les données compressées. Ce tampon est continuellement vidé au débit du canal réseau. L'algorithme de contrôle de débit doit empêcher le tampon de déborder ou de se vider. Le paramètre de quantification Q évolue proportionnellement au taux de remplissage du tampon. L'inconvénient de ce codage est qu'il oblige toutes les scènes à générer le même débit et donc à avoir des qualités visuelles différentes.

Un exemple de la description d'un algorithme de contrôle qui permet de rendre le débit égal à un débit spécifié *a priori* en sortie du codeur est donné par la norme Mpeg.

Dans le cas où le paramètre de quantification est constant pendant la durée de toute la séquence vidéo, c'est le débit en sortie du codeur qui varie. On dira que le codeur fonctionne en boucle ouverte.

Le but de l'invention est de proposer un procédé de contrôle de débit de sortie d'un codeur vidéo qui soit en conformité avec le modèle du seau percé.

On connaît déjà un tel procédé et on pourra se reporter à l'article de A. R. Reibman et de B. G. Haskell intitulé "Constraints on Variable bit rate video for ATM networks" paru dans la revue IEEE Transactions On Circuits and Systems for Video Technology, 254):361-372 de décembre 1992. Dans cet article, Reibman et Haskell montrent un système qui comprend un codeur vidéo pourvu d'un tampon et un dispositif prévu pour contrôler le débit transmis au réseau. Pour ce faire, ils utilisent le modèle du seau percé et fait varier le paramètre de quantification Q en fonction des taux de remplissage du tampon et du seau. Plus exactement, il est considéré un seau percé dont la taille est M et dont le débit de fuite est égal au débit moyen voulu du trafic. Si X(t) est le remplissage du seau à l'instant t, $B^d_{max}$ taille maximale du tampon du décodeur et $B^d(t)$ sa taille à l'instant t et si, à l'instant t, on veut coder une image qui va être décodée à l'instant t + T, on utilise un paramètre de quantification Q qui est proportionnel au remplissage du seau et du tampon du décodeur. Il en résulte que le débit est inversement proportionnel au paramètre de quantification, si bien que plus le seau et le tampon se remplissent et plus le débit généré est faible. Ceci permet de rester en deçà des valeurs maximales permises pour le débit transmis au réseau. Le paramètre de quantification Q est donné par la relation suivante:

$$Q = 2 * INT(32 * max\{X(t)/M, [(B^d_{max} - B^d(t+T)/B^d_{max}]\}) + 2$$

où INT signifie "partie entière de".

Partant de cette première expression, Reibman propose de minorer le paramètre de quantification Q par une

valeur préfixée $Q_{min}$ pour éviter que des valeurs trop faibles du paramètre de quantification Q ne génèrent des débits trop importants qui rempliraient le seau inutilement:

$$Q = max \{Q_{min}, 2 * INT(32*max\{X(t)/M, [(B^d_{max}-B^d(t+T))/B^d_{max}]\})+2\}$$

L'inconvénient de cet algorithme est que le choix du paramètre de quantification Q ne dépend que du remplissage du seau et ne prend pas en considération la complexité de la scène en cours. En effet, si le seau est vide, l'algorithme augmente le débit de l'image même si celle-ci est très peu active et peut se contenter d'un débit de transmission inférieur à un débit de valeur moyenne. Le seau va donc se remplir à cause du débit élevé généré mais cela n'entraînera pas une amélioration de la qualité de la scène si celle-ci est peu active. Du fait que le seau est rempli, la scène suivante va être contrainte à générer un débit moyen ou un débit inférieur ce qui, dans le cas où cette scène est une scène active, va entraîner une dégradation visible de l'image.

Aussi, l'algorithme décrit par Reibman et Haskell permet le contrôle du tampon du codeur et du seau du processus de contrôle mais ne gère pas de manière satisfaisante la répartition du débit en fonction de la complexité de la scène.

Le but de l'invention est de remédier à cet inconvénient et est donc de proposer un procédé de contrôle du débit qui tienne compte de la complexité de la scène tout en maintenant la condition de non débordement du seau.

Afin d'atteindre ce but, l'invention propose un procédé de contrôle de débit de sortie d'un codeur de données numériques représentatives de séquences d'images, le codage effectué par ledit codeur comportant une étape de quantification de paramètre de quantification Q, lesdites séquences d'images étant composées de groupes d'images successifs. Ledit procédé consiste à déterminer, au moment de la présence du i[ème] groupe d'images en sortie du codeur, le paramètre de quantification Q(i + 1) pour le codage du (i + 1)[ème] groupe d'images de manière à ce que le débit en sortie dudit codeur soit en conformité avec un modèle de seau percé défini par une taille M et par un débit de fuite $\lambda$.

Il est caractérisé en ce qu'il consiste à déterminer ledit paramètre de quantification Q(i + 1) pour le codage du (i + 1)[ème] groupe d'images en fonction de l'activité de la scène représentée par le i[éme] groupe d'images, la scène dudit i[ème] groupe d'images étant dite active lorsque son débit en boucle ouverte est supérieur au débit $\lambda$ du seau percé et étant dite peu active lorsqu'il lui est inférieur, ledit débit en boucle ouverte d'un groupe d'images étant le débit que présenterait ledit bloc d'images en sortie dudit codeur s'il avait été quantifié avec un paramètre de quantification constant Qo choisi de telle sorte que le débit moyen D sur toute la séquence d'images à laquelle appartient ledit bloc d'images soit égal au débit de fuite dudit seau percé.

Avantageusement, il consiste à déterminer le paramètre de quantification Q(i + 1) de manière que le débit en sortie du codeur soit égal, dans le cas de scènes actives, soit au débit en boucle ouverte lorsque le taux de remplissage du seau est nul, soit au débit de fuite dudit seau percé lorsque le taux de remplissage du seau est égal au taux de remplissage maximal dudit seau, soit à une valeur comprise entre le débit en boucle ouverte et le débit de fuite lorsque le taux de remplissage dudit seau prend une valeur non nulle inférieure à son taux de remplissage maximal, et, dans le cas de scènes peu actives, soit au débit de fuite dudit seau percé lorsque le taux de remplissage du seau est nul, soit au débit en boucle ouverte lorsque le taux de remplissage du seau est égal au taux de remplissage maximal dudit seau, soit à une valeur comprise entre le débit de fuite et le débit en boucle ouverte lorsque le taux de remplissage dudit seau prend une valeur non nulle inférieure à son taux de remplissage maximal.

Avantageusement, il consiste à déterminer le paramètre de quantification par calcul, dans le cas de scènes actives, d'une fonction ayant pour variable le taux de remplissage du seau percé et pour paramètre, le débit de fuite dudit seau, le taux de remplissage maximal dudit seau et un paramètre de quantification prédéterminé et, dans le cas de scènes peu actives, d'une autre fonction ayant les mêmes variables et les mêmes paramètres.

Il consiste à déterminer le paramètre de quantification de manière que le débit en sortie du codeur soit égal, dans le cas de scènes actives, au résultat du calcul d'une fonction f continue décroissante ayant pour variable le taux de remplissage du seau percé qui prend une valeur égale au débit en boucle ouverte pour une valeur nulle du taux de remplissage du seau, une valeur égale au débit de fuite dudit seau percé pour une valeur du taux de remplissage du seau égale au taux de remplissage maximal dudit seau, et une valeur comprise entre le débit en boucle ouverte et le débit de fuite pour des valeurs intermédiaires du taux de remplissage et, dans le cas de scènes peu actives, au résultat du calcul d'une fonction g continue décroissante ayant pour variable le taux de remplissage du seau percé qui prend une valeur égale soit au débit de fuite dudit seau percé pour une valeur du taux de remplissage nulle, une valeur égale au débit en boucle ouverte pour une valeur du taux de remplissage du seau égale au taux de remplissage maximal dudit seau, et des valeurs comprises entre le débit de fuite et le débit en boucle ouverte pour des valeurs intermédiaires du taux de remplissage.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 est un schéma synoptique d'un procédé selon l'invention,

la Fig. 2 est un graphe montrant deux courbes dans lesquelles on peut constater la constante du produit G x Q, où G est le débit tel que défini ci-dessous,

la Fig. 3 montre deux courbes représentant la variation du débit en sortie du codeur en fonction du taux de remplissage du seau percé, et ce, pour des scènes actives et peu actives,

la Fig. 4 est un graphe représentant les fonctions utilisées par le procédé de l'invention,

la Fig. 5 est un graphe montrant l'efficacité du procédé de l'invention, et

la Fig. 6 est un graphe montrant la variation du taux de remplissage du seau percé en fonction des numéros d'images pour une séquence d'images donnée.

Préalablement à la description proprement dite de l'invention, on va définir les notions de trafic et de conformité à un modèle de seau percé.

Le trafic de sortie d'un codeur est défini sur la base des groupes d'images que celui-ci délivre sur sa sortie. Ce trafic noté {G} est défini par une suite de nombres G(i) qui mesurent le nombre de bits générés par la compression du $i^{\text{èm}}$ groupe d'images d'une séquence vidéo. La période de chaque groupe d'images est notée $\tau$. On définit le débit moyen D sur une séquence vidéo de taille égale à n groupes d'images par la relation suivante:

$$D = \frac{1}{n\tau} \sum_{i=0}^{n-1} G(i)$$

Le modèle du seau percé (ou *leaky bucket* en terminologie anglaise) peut être défini de plusieurs manières exprimant toutes la même chose. Deux paramètres servent à définir un seau percé: la taille du seau noté M (en bits) et le débit de fuite noté $\lambda$ (en bits par seconde). Un trafic {G} est conforme à un modèle de seau percé de paramètres M et $\lambda$ s'il vérifie la relation suivante:

$$\forall (n < m) \qquad \sum_{i=n}^{m-1} G(i) \leq \lambda\tau(m-n) + M$$

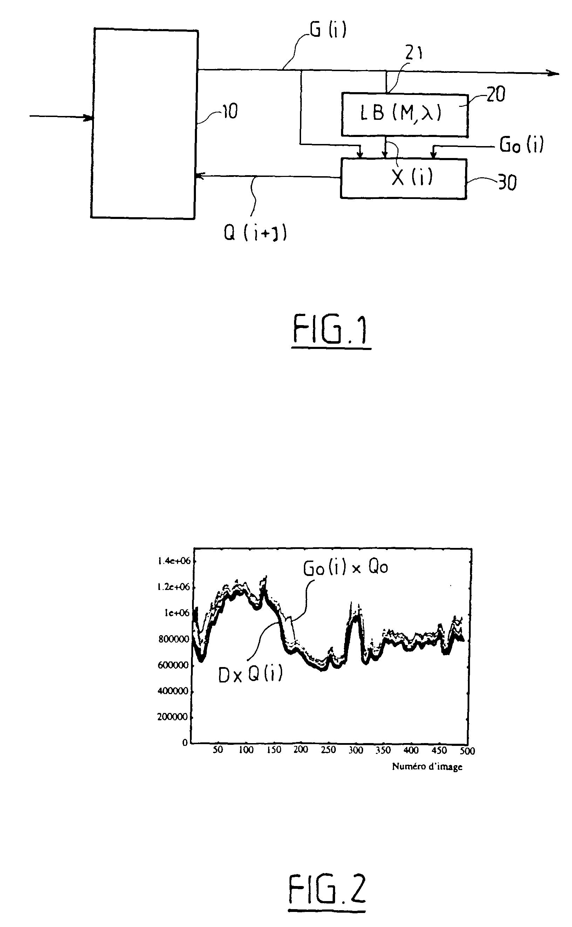

Ceci étant précisé, on va maintenant considérer la Fig. 1 qui est une représentation schématique du procédé selon l'invention. Sur cette Fig. 1, on peut voir un codeur 10 qui assure le codage des séquences vidéo qui sont présentes sur son entrée et qui délivre, pour chaque séquence vidéo, une suite de blocs d'images chacun référencé par un indice variant de 1 à n, n étant le nombre de groupes d'images dans ladite séquence. Le $i^{\text{ème}}$ bloc d'images d'une séquence présente donc l'indice i. Le codage est effectué par quantification de chaque bloc d'images avec un paramètre de quantification noté Q(i) et génère un débit de bits pour ce bloc d'images noté G(i).

Toujours sur la Fig. 1, on peut voir une représentation schématique 20 du seau percé. Il reçoit sur son entrée 21 chaque groupe d'images i présentant un débit G(i). Le seau percé 20 est défini par deux paramètres: sa taille notée M (en bits) et le débit de fuite noté $\lambda$ (en bits par seconde). En fonction de la valeur du débit G(i) présent sur son entrée, du paramètre de taille M et du paramètre de débit de fuite $\lambda$, le seau percé 20 calcule une information notée X(i) correspondant au nombre de bits dans le seau 20 au moment du $i^{\text{ème}}$ bloc d'images.

Sur la Fig. 1, on voit encore un dispositif de contrôle 30 qui met en oeuvre le procédé de l'invention. Il reçoit sur ses entrées, au moment du traitement du $i^{\text{ème}}$ bloc d'images, l'information X(i) concernant le nombre de bits présents dans le seau 20 et la valeur du débit de bits G(i) en sortie du codeur 10. Le dispositif 30 délivre, au codeur 10, la valeur du paramètre de quantification Q(i + 1) que ce dernier appliquera au $(i + 1)^{\text{ème}}$ bloc d'images de la séquence vidéo en cours de traitement.

Comme on le verra dans la suite de la description, le procédé de l'invention nécessite également la valeur prise par le débit Go(i) qui est le débit que présenterait le $i^{\text{ème}}$ bloc d'images s'il avait été quantifié dans le codeur 10 avec un paramètre de quantification prédéterminé Qo constant. Le paramètre Qo doit être choisi de telle sorte que le débit moyen D sur toute la séquence vidéo dont chaque groupe d'images est quantifié avec ce paramètre constant Qo soit égal au débit fuite $\lambda$ du seau 20. On a D qui vérifie alors la relation suivante:

$$D = \frac{1}{n\tau} \sum_{i=0}^{n-1} G(i)$$

Le codeur 10 est alors dit fonctionner en boucle ouverte. Chaque valeur de débit Go(i) est soit délivrée par le codeur 10, soit, comme on le verra dans un mode particulier de réalisation de l'invention, calculée par le dispositif 30.

Le but de l'invention est de maintenir une qualité qui soit la plus proche possible de celle offerte par un codage en boucle ouverte. Or, le trafic engendré par un codage en boucle ouverte ne garantit pas de conformité à un modèle de seau percé LB(M,λ) car il n'est pas contraint en débit.

D'une manière générale, une scène active a tendance à remplir le seau car, par définition, elle génère un débit supérieur au débit moyen D qui, en boucle ouverte, est égal au débit de fuite λ du seau. Une scène de faible activité tend au contraire à vider le seau puisqu'elle génère un débit supérieur à λ. Si une scène active est excessivement longue, le seau de capacité M déborde.

Pour résoudre ce problème, l'invention propose d'agir sur le paramètre de quantification Q pour satisfaire cette contrainte sur le débit. Le facteur de gain de la bouche de réaction est cependant beaucoup plus faible que celui des algorithmes dans lesquels le débit en sortie du codeur est maintenu constant.

On va considérer les deux cas limites qui sont, d'une part, le seau est rempli (X(i) = M) et, d'autre part, le seau est vide (X(i) = 0).

Dans le premier cas, lorsque la scène est active, c'est-à-dire lorsque Go(i)>λ, on choisit le facteur de quantification Q(i + 1) de manière que le débit G(i + 1) soit égal au débit de fuite λ du seau. Lorsque la scène est peu active, c'est-à-dire lorsque Go(i)<λ, le facteur de quantification choisi Q(i + 1) est celui de boucle ouverte, c'est-à-dire Qo. Le débit G(i) est alors égal au débit de boucle ouverte Go(i).

Ainsi, lorsque le seau est rempli, les scènes actives ne dépasse le débit λ et le seau ne déborde pas. Quant aux scènes peu actives, elles sont codées en boucle ouverte et leur faible débit permet de vider le seau. La qualité visuelle est donc au moins aussi bonne qu'avec le procédé de codage à débit constant pour les scènes actives et qu'avec le procédé de codage en boucle ouverte pour les scènes peu actives.

Dans le second cas (X(i) = 0), lorsque la scène est active, c'est-à-dire lorsque Go(i)>λ, on choisit le facteur de quantification Q(i + 1) = Qo permettant d'obtenir un débit G(i + 1) qui soit égal au débit de boucle ouverte, soit Go (i). Par contre, lorsque la scène est peu active, c'est-à-dire lorsque Go(i)<λ, le facteur de quantification Q(i + 1) qui est choisi permet d'obtenir un débit G(i) qui est égal au débit de fuite du seau, c'est-à-dire λ.

Ainsi, si le seau est peu rempli, la qualité du groupe d'images i pour une scène peu active est au moins aussi bonne que celle obtenue par un codage en boucle ouverte qui, lui, aurait généré un débit inférieur à λ. Une scène active est par contre autorisée à générer un débit supérieur à λ et donc à remplir le seau.

Le tableau ci-dessous récapitule ces quatre conditions. On a noté $Q_\lambda$ (i + 1) le paramètre de quantification qui permet d'obtenir un débit G(i) pour le i$^{ème}$ bloc d'images égal à λ.

|  | $G_0(i) \leq \lambda$ | $G_0(i) \geq \lambda$ |
|---|---|---|
| $X(i) \approx M$ | $Q(i) = Q_0$ | $Q(i) = Q_\lambda(i)$ |
| $X(i) \approx 0$ | $Q(i) = Q_\lambda(i)$ | $Q(i) = Q_0$ |

Pour des valeurs de remplissage du seau intermédiaires, les valeurs du paramètre de quantification Q(i + 1) choisies permettent d'obtenir des débits G(i) qui sont respectivement dans le cas de scènes actives ou dans celui de scènes peu actives comprises entre Go(i) et λ ou entre λ et Go(i). On peut écrire les relations suivantes:

- dans le cas de scènes actives:

$$G(i) = f(Go(i), \lambda, X(i))$$

avec f(Go(i), λ, 0) = Go(i) et f(Go(i), λ, M) = λ

- et, dans le cas de scènes peu actives:

$$G(i) = g(Go(i), \lambda, X(i))$$

avec $g(Go(i), \lambda, 0) = \lambda$ et $g(Go(i), \lambda, M) = Go(i)$

D'après la théorie de traitement des images telle qu'elle est décrite par T. Berger dans un ouvrage intitulé "Rate Distorsion Theory, a Mathematical Basis for Data Compression", Englewood Cliffs, NJ: Prentivce Hall, de 1971, il est aujourd'hui admis que la fonction de débit et la fonction de distorsion de l'image varient en sens inverse l'une de l'autre et que la relation débit-distorsion d'une séquence vidéo dépend de l'activité de la scène. Le paramètre de quantification Q est directement responsable de la distorsion de l'image. En effet, plus sa valeur est élevée et plus l'image est distordue et vice versa. On déduit donc de ceci que la valeur prise par le paramètre de quantification Q et le débit G qui résulte de cette quantification varient en sens inverse l'un de l'autre.

La relation qui lie Q et G n'est pas simple à déterminer et a fait l'objet de nombreuses recherches. Cependant, on notera que toutes ces recherches s'intéressent à une relation exacte et précise qui soit valable à l'échelle du macrobloc car elle est nécessaire pour les algorithmes de codage à débit constant.

Or, dans la présente invention, on s'intéresse à un autre type de contrôle qui agit, non pas au niveau du macrobloc mais au niveau du groupe d'images. La relation qui lie donc le paramètre de quantification Q et le débit G qui, si on s'intéresse à un groupe d'images, sont moyennés sur le groupe d'images, peut être approximée plus facilement car les variations fines à l'intérieur d'une image ne sont plus prises en compte. On a établi une fonction empirique entre le paramètre de quantification Q et le débit G. Pour ce faire, on a compressé une séquence vidéo contenant 500 images au format CIF en utilisant l'algorithme Mpeg-1. On a effectué cinq compressions en boucle ouverte (la valeur du paramètre de quantification est constante et égale à Qo) pour cinq valeurs différentes du paramètre de quantification Qo et cinq autres pour des valeurs de débit Go donnant cinq valeurs de débit moyen D constant.

Le tableau ci-dessous montre les moyennes de débit pour le codage en boucle ouverte et les moyennes des paramètres de quantification pour le codage à débit moyen constant.

| $Q$ | $\overline{G_0(i)}$ en b/s |
|---|---|
| 25 | 854630 |
| 30 | 713382 |
| 35 | 625557 |
| 40 | 557260 |
| 45 | 505107 |

| $\lambda$ en b/s | $\overline{Q_\lambda(t)}$ | $\lambda Q \, x10^{-6}$ |
|---|---|---|
| 854630 | 25.62 | 21.36 |
| 713382 | 30.44 | 21.40 |
| 625557 | 34.79 | 21.89 |
| 557260 | 39.80 | 22.29 |
| 505107 | 44.86 | 22.72 |

Boucle ouverte                    Débit moyen constant

On peut constater que le produit de la valeur du paramètre de quantification Q et du débit moyen D est quasiment constant à $23\pm3\%$ et est indépendant de la nature du codage (boucle ouverte ou débit moyen constant) ainsi que de la valeur prise par le paramètre de quantification Q.

La Fig. 2 montre les valeurs prises par les produits D x $Q_\lambda(1)$ et Go(i) x Qo en fonction des numéros d'images. On peut constater encore que ces deux produits sont égaux pour tout groupe d'images et qu'il ne dépend par conséquent que de l'image à traiter et ses variations indiquent l'activité de la scène.

Des constatations précédentes, on peut écrire la relation suivante:

$$\forall i, \qquad G_0(i) \times Q_0 = \lambda Q_\lambda(t) = G(i) \times Q(i)$$

De cette relation, on peut écrire une relation récurrente donnant la valeur de Q(i + 1):

$$Q(i + 1) = Qo \times Go(i)/G(i)$$

Compte tenu des relations précédentes, on peut écrire, dans le cas de scènes actives:

$$Q(i + 1) = Qo \times Go(i)/fGo(i), \lambda, X(i))$$

et, dans le cas de scènes peu actives:

$$Q(i + 1) = Qo \times Go(i)/g(Go(i), \lambda, X(i))$$

On notera que les fonctions $fGo(i), \lambda, X(i))$ et $g(Go(i), \lambda, X(i))$ peuvent être exprimées uniquement en fonction des paramètres $M$, $\lambda$, et $Go(i)$, ou $Qo$.

On peut constater ainsi que les paramètres des relations sont alors $\lambda$, $M$ et $Qo$. Les deux premiers paramètres sont ceux du seau percé et sont donc fixés selon des considérations liées au contrat de réseau et/ou de la qualité d'image voulue. Quant au paramètre $Qo$, il doit être choisi de telle sorte que le débit moyen $D$ du trafic engendré par un codage en boucle ouverte de paramètre $Qo$ soit précisément égal à $\lambda$.

Le débit $G(i)$ prévu pour un groupe d'images donné dépend de l'état de remplissage du seau $X(i)$ ainsi que de l'activité de la scène. Les performances du procédé de l'invention en terme de qualité visuelle ainsi que de stabilité dépendent de la manière dont le débit $G(i)$ varie avec l'état de remplissage du seau $X(i)$.

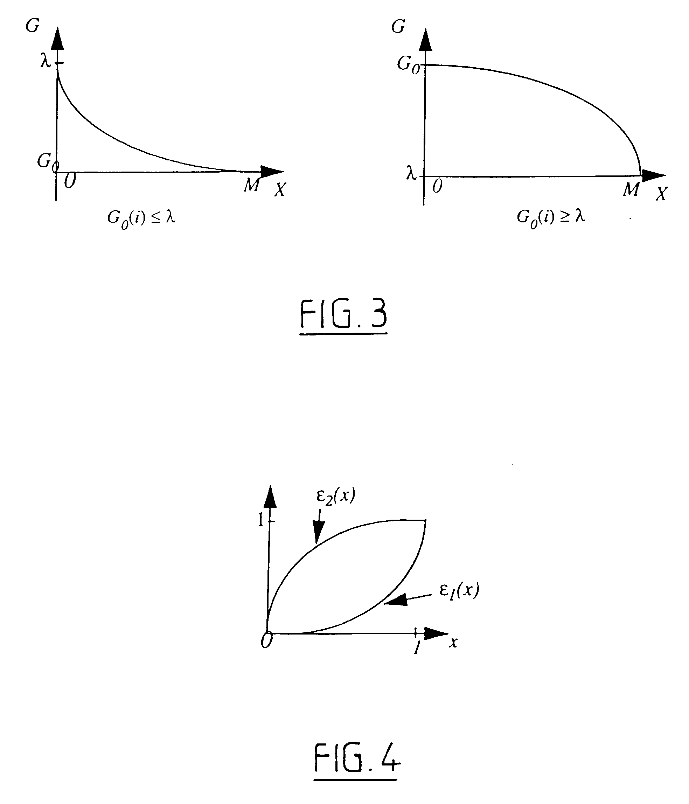

On a cherché une formulation de $G(i)$ en fonction de $X(i)$ qui soit particulièrement avantageuse. On a représenté à la Fig. 3 des courbes des variations de $G(i)$ en fonction de $X(i)$ dans le cas de scènes actives et dans le cas de scènes non actives. La forme de ces courbes est choisie pour stimuler le remplissage du seau pendant les scènes actives et encourager les scènes peu actives à le vider. En effet, pour une scène de faible activité identifiée par $Go(i) < \lambda)$ un seau à moitié plein est considéré comme étant encore presque plein. Le débit engendré par les groupes d'images de cette scène va donc être proche de $Go(i)$ ce qui permet de vider le seau plus rapidement. Inversement, pour une scène très active identifiée par $Go(i) > \lambda$, un seau rempli à moitié est vu comme étant presque vide. Le débit engendré n'est donc pas restreint ce qui permet de maintenir la qualité visuelle de cette scène le plus longtemps possible dans la limite de la taille du seau. L'allocation de $G(i)$ peut alors s'écrire comme suit:

$$G_0(i) \geq \lambda \Rightarrow \quad (G(i) = G_0(i).(1 - \varepsilon_1(x)) + \lambda.\varepsilon_1(x))$$

$$G_0(i) \leq \lambda \Rightarrow \quad (G(i) = \lambda.(1 - \varepsilon_2(x)) + G_0(i).\varepsilon_2(x))$$

avec $x = \frac{X(i)}{M}$ désigne le remplissage normalisé du seau.

La Fig. 4 montre la forme des fonctions $\varepsilon_k(x)$.

Les fonctions explicites que l'on a choisies sont:

$$\varepsilon_1(x) = x^\alpha \text{ and } \varepsilon_2(x) = 1 - (1 - x)^\alpha.$$

Si l'on reporte ces équations dans celles qui donnent $Q(i + 1)$, on obtient:

$$Q(i+ 1) = \frac{Q_o G_0(i)}{(1 - \varepsilon_1(x))G_0(i) + \varepsilon_1(x)\lambda} \qquad \text{si } G_0(i) > \lambda$$

et

$$Q(i + 1) = \frac{QG_0(i)}{\varepsilon_2(x)G_0(i) + (1 - \varepsilon_2(x))\lambda} \qquad \text{si } G_0(i) \leq \lambda$$

où

$$G_0(i) = \frac{G\,i\,Q(i)}{Q_o} \text{ et } x = \frac{X(i)}{M}$$

On a implanté et testé l'algorithme précédent sur le logiciel de codage Mpeg diffusé par l'université de Berkley. On a codé une séquence de 2000 images, d'une part, en boucle ouverte en utilisant un paramètre de quantification constant Qo égal à 35 et, d'autre part, en utilisant l'algorithme de l'invention avec les paramètres $\lambda$ = 0.78 Mbits/s, M = 564710 bits ce qui équivaut à une taille moyenne pour le stockage de 18 images et un paramètre de quantification Qo = 35. La taille de chaque groupe d'images était de 12 images.

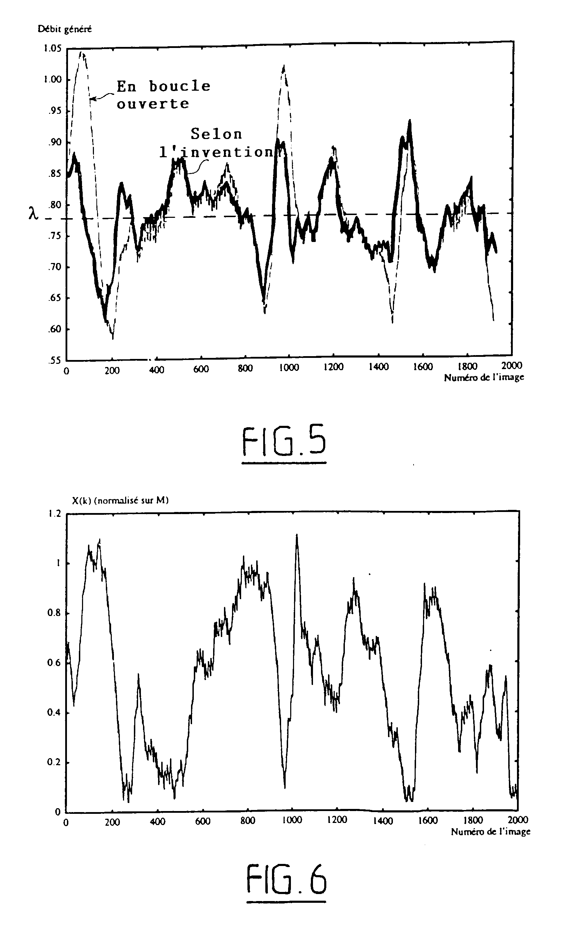

La Fig. 5 montre les débits respectivement générés par ces deux codages. On peut observer que l'algorithme de l'invention génère moins de trafic que le codage en boucle ouverte pour les scènes très actives (images 1 à 150 et 900 à 1000) et plus de trafic pour les scènes peu actives (voir par exemple les images 200 à 300 et 1400 à 1500). La variabilité du débit est donc maintenue et est proportionnelle à la complexité de la scène. Les variations du taux de remplissage du seau X(i) sont présentées à la Fig. 6. La dynamique du remplissage du seau montre que l'algorithme de la présente invention exploite pleinement la variabilité permise en ce sens où il vide le seau lors des scènes peu actives et le remplit lors des scènes actives donnant ainsi une meilleure qualité visuelle. Ce comportement ne peut être réalisé par les algorithmes de l'art antérieur.

## Revendications

1. Procédé de contrôle de débit de sortie d'un codeur de données numériques représentatives de séquences d'images, le codage effectué par ledit codeur comportant une étape de quantification de paramètre de quantification Q, lesdites séquences d'images étant composées de groupes d'images successifs, ledit procédé consistant à déterminer, au moment de la présence du i<sup>ème</sup> groupe d'images en sortie du codeur, le paramètre de quantification Q (i + 1) pour le codage du (i + 1)<sup>ème</sup> groupe d'images de manière à ce que le débit en sortie dudit codeur soit en conformité avec un modèle de seau percé défini par une taille M et par un débit de fuite $\lambda$, caractérisé en ce qu'il consiste à déterminer ledit paramètre de quantification Q(i + 1) pour le codage du (i +1)<sup>ème</sup> groupe d'images en fonction de l'activité de la scène représentée par le i<sup>ème</sup> groupe d'images, la scène dudit i<sup>ème</sup> groupe d'images étant dite active lorsque son débit en boucle ouverte est supérieur au débit $\lambda$ du seau percé et étant dite peu active lorsqu'il lui est inférieur, ledit débit en boucle ouverte d'un groupe d'images étant le débit que présenterait ledit bloc d'images en sortie dudit codeur s'il avait été quantifié avec un paramètre de quantification constant Qo choisi de telle sorte que le débit moyen D sur toute la séquence d'images à laquelle appartient ledit bloc d'images soit égal au débit de fuite dudit seau percé.

2. Procédé selon la revendication 1, caractérisé en ce qu'il consiste à déterminer le paramètre de quantification Q(i + 1) de manière que le débit en sortie du codeur soit égal, dans le cas de scènes actives, soit au débit en boucle ouverte lorsque le taux de remplissage du seau est nul, soit au débit de fuite dudit seau percé lorsque le taux de remplissage du seau est égal au taux de remplissage maximal dudit seau, soit à une valeur comprise entre le débit en boucle ouverte et le débit de fuite lorsque le taux de remplissage dudit seau prend une valeur non nulle inférieure à son taux de remplissage maximal, et, dans le cas de scènes peu actives, soit au débit de fuite dudit seau percé lorsque le taux de remplissage du seau est nul, soit au débit en boucle ouverte lorsque le taux de remplissage du seau est égal au taux de remplissage maximal dudit seau, soit à une valeur comprise entre le débit de fuite et le débit en boucle ouverte lorsque le taux de remplissage dudit seau prend une valeur non nulle inférieure à son taux de remplissage maximal.

3. Procédé selon une des revendications précédentes, caractérisé en ce qu'il consiste à déterminer le paramètre de quantification par calcul, dans le cas de scènes actives, d'une fonction ayant pour variable le taux de remplissage du seau percé et pour paramètre, le débit de fuite dudit seau, le taux de remplissage maximal dudit seau et un paramètre de quantification prédéterminé et, dans le cas de scènes peu actives, d'une autre fonction ayant les mêmes variables et les mêmes paramètres.

4. Procédé selon la revendication 1 ou 2, caractérisé en ce qu'il consiste à déterminer le paramètre de quantification de manière que le débit en sortie du codeur soit égal, dans le cas de scènes actives, au résultat du calcul d'une fonction f continue décroissante ayant pour variable le taux de remplissage du seau percé qui prend une valeur égale au débit en boucle ouverte pour une valeur nulle du taux de remplissage du seau, une valeur égale au débit de fuite dudit seau percé pour une valeur du taux de remplissage du seau est égale au taux de remplissage maximal dudit seau, et une valeur comprise entre le débit en boucle ouverte et le débit de fuite pour des valeurs intermédiaires du taux de remplissage et, dans le cas de scènes peu actives, au résultat du calcul d'une fonction g continue décroissante ayant pour variable le taux de remplissage du seau percé qui prend une valeur égale soit au débit de fuite dudit seau percé pour une valeur du taux de remplissage nulle, une valeur égale au débit en boucle ouverte pour une valeur du taux de remplissage du seau égale au taux de remplissage maximal dudit seau, et des valeurs comprises entre le débit de fuite et le débit en boucle ouverte pour des valeurs intermédiaires du taux de remplissage.

5. Procédé selon la revendication 4, caractérisé en ce qu'il consiste à déterminer le paramètre de quantification par calcul des fonctions suivantes:

a) dans le cas de scènes actives:

$$Q(i + 1) = Qo \times Go(i)/f$$

b) dans le cas de scènes peu actives:

$$Q(i + 1) = Qo \times Go(i)/g$$

6. Procédé selon une des revendications 4 ou 5, caractérisé en ce que la fonction f a une dérivée de valeurs décroissantes avec le taux de remplissage du seau et la fonction g a une dérivée de valeurs décroissantes avec le taux de remplissage du seau.

7. Procédé selon la revendication 6, caractérisé en ce que la fonction f s'écrit:

$$f = G_0(i).(1 - \varepsilon_1(x)) + \lambda \text{-} \varepsilon_1(x)$$

et la fonction g s'écrit:

$$g = \lambda.(1 - \varepsilon_2(x)) + G_0(i).\varepsilon_2(x)$$

**Patentansprüche**

1. Kontrollverfahren für die Ausgangsleistung eines Codierers für digitale Daten, die für Bildsequenzen repräsentativ sind, wobei die von dem Codierer durchgeführte Codierung eine Quantifizierungsetappe des Quantifizierungsparameters Q umfaßt, wobei die Bildsequenzen aus aufeinanderfolgenden Bildgruppen zusammengesetzt sind, wobei das Verfahren darin besteht, zum Zeitpunkt des Vorhandenseins der i-ten Gruppe von Bildern am Ausgang des Codierers den Quantifizierungsparameter Q(i+1) für die Codierung der (i+1)-ten Bildgruppe zu bestimmen, so daß die Leistung am Ausgang des Codierers mit einem Modell eines undichten Eimers übereinstimmt, das durch eine Größe M und eine Leckageleistung λ definiert ist, dadurch gekennzeichnet, daß es darin besteht, den Quantifizierungsparameter (i+1) für die Codierung der (i+1)-ten Bildgruppe in Abhängigkeit von der Aktivität der durch die i-te Bildgruppe dargestellten Szene zu bestimmen, wobei die Szene der i-ten Bildgruppe aktiv genannt wird, wenn ihre Leistung bei offener Schleife größer als die Leistung λ des undichten Eimers ist, und wenig aktiv genannt wird, wenn sie geringer als diese ist, wobei die Leistung bei offener Schleife einer Bildgruppe die Leistung ist, die der Bildblock am Ausgang des Codierers aufweisen würde, wenn er mit einem konstanten Quantifizierungsparameter Qo quantifiziert worden wäre, der derart ausgewählt wird, daß die durchschnittliche Leistung D auf der gesamten Bildsequenz, der der Bildblock angehört, gleich der Leckageleistung des undichten Eimers ist.

2. Verfahren nach Anspruch 1, dadurch gekennzeichnet, daß es darin besteht, den Quantifizierungsparameter Q (i+1) derart zu bestimmen, daß die Leistung am Ausgang des Codierers im Falle von aktiven Szenen entweder gleich der Leistung bei offener Schleife, wenn die Befüllungsrate des Eimers gleich Null ist, oder gleich der Leckageleistung dieses undichten Eimers, wenn die Befüllungsrate des Eimers gleich der maximalen Befüllungsrate dieses Eimers ist, oder gleich einem Wert zwischen der Leistung bei offener Schleife und der Leckageleistung ist, wenn die Befüllungsrate des Eimers einen Wert ungleich Null unter der maximalen Befüllungsrate annimmt, und im Falle von wenig aktiven Szenen entweder gleich der Leckageleistung des undichten Eimers, wenn die Befüllungsrate des Eimers gleich Null ist, oder gleich der Leistung bei offener Schleife, wenn die Befüllungsrate des Eimers gleich der maximalen Befüllungsrate des Eimer ist, oder gleich einem Wert zwischen der Leckageleistung und der Leistung bei offener Schleife ist, wenn die Befüllungsrate des Eimers einen Wert ungleich Null unter seiner maximalen Befüllungsrate annimmt.

3. Verfahren nach einem der vorhergehenden Ansprüche, dadurch gekennzeichnet, daß es darin besteht, den Quantifizierungsparameter durch Berechnung, im Falle aktiver Szenen, einer Funktion zu bestimmen, die als Variable die Befüllungsrate des undichten Eimers und als Parameter die Leckageleistung des Eimers, die maximale Befüllungsrate des Eimers und einen vorbestimmten Quantifizierungsparameter aufweist, und im Falle wenig aktiver Szenen durch Berechnung einer Funktion, die dieselben Variablen und dieselben Parameter aufweist.

4. Verfahren nach Anspruch 1 oder 2, dadurch gekennzeichnet, das es darin besteht, den Quantifizierungsparameter derart zu bestimmen, daß die Leistung am Ausgang des Codierers im Falle aktiver Szenen gleich dem Ergebnis der Berechnung einer kontinuierlichen fallenden Funktion f ist, die als Variable die Befüllungsrate des undichten Eimers aufweist, die einen Wert gleich der Leistung bei offener Schleife bei einem Nullwert der Befüllungsrate des Eimers, einen Wert gleich der Leckageleistung des undichten Eimers bei einem Wert der Befüllungsrate des Eimers gleich der maximalen Befüllungsrate des Eimers und einen Wert zwischen der Leistung bei offener Schleife und der Leckageleistung bei Zwischenwerten der Befüllungsrate annimmt, und im Falle wenig aktiver Szenen gleich dem Ergebnis der Berechnung einer kontinuierlichen fallenden Funktion g ist, die als Variable die Befüllungsrate des undichten Eimers aufweist, die einen Wert gleich der Leckageleistung bei einem Nullwert der Befüllungsrate des Eimers, einen Wert gleich der Leistung bei offener Schleife bei einem Wert der Befüllungsrate des Eimers gleich der maximalen Befüllungsrate des Eimers und einen Wert zwischen der Leistung bei offener Schleife und der Leckageleistung bei Zwischenwerten der Befüllungsrate annimmt.

5. Verfahren nach Anspruch 4, dadurch gekennzeichnet, daß es darin besteht, den Quantifizierungsparameter durch Berechnung der folgenden Funktionen zu bestimmen:

   a) im Falle aktiver Szenen:

$$Q(i+1) = Qo \times Go(i)/f$$

   b) im Falle wenig aktiver Szenen:

$$Q(i+1) = Qo \times Go(i)/g$$

6. Verfahren nach einem der Ansprüche 4 oder 5, dadurch gekennzeichnet, daß die Funktion f ein fallendes Wertedifferential mit der Befüllungsrate des Eimers und die Funktion g ein fallendes Wertedifferential mit der Befüllungsrate des Eimers aufweisen.

7. Verfahren nach Anspruch 6, dadurch gekennzeichnet, daß die Funktion f lautet:

$$f = Go(i).(1-\varepsilon_1(x)) + \lambda.\varepsilon_1(x)$$

und die Funktion g lautet:

$$g = \lambda.(1-\varepsilon_2(x)) + Go(i).\varepsilon_2(x)$$

**Claims**

1. Method of monitoring the output rate of a coder of digital data representing image sequences, the coding carried out by said coder including a stage of quantizing the quantization parameter Q, said image sequences being made up of successive groups of images, said method consisting in determining, at the moment of the presence of the

$i^{th}$ group of images in the coder output, the quantization parameter $Q(i + 1)$ for the coding of the $(i + 1)^{th}$ group of images so that the output rate of said coder is in conformity with a leaky bucket model defined by a size M and by a leakage rate $\lambda$, **characterised in that** it consists in determining said quantization parameter $Q(i + 1)$ for the coding of the $(i + 1)^{th}$ group of images as a function of the activity of the scene represented by the $i^{th}$ group of images, the scene of said $i^{th}$ group of images being called active when its open-loop rate is greater than the rate $\lambda$ of the leaky bucket and being called not very active when it is lower than it, said open-loop rate of a group of images being the rate which said block of images would have at the output of said coder if it had been quantized with a constant quantization parameter Qo chosen such that the average rate D over the entire image sequence to which said block of images belongs is equal to the leakage rate of said leaky bucket.

2. Method according to claim 1, **characterised in that** it consists in determining the quantization parameter $Q(i + 1)$ so that the output rate of the coder is equal, in the case of active scenes, either to the open-loop rate when the filling level of the bucket is zero, or to the leakage rate of said leaky bucket when the filling level of the bucket is equal to the maximum filling level of said bucket, or to a value between the open-loop rate and the leakage rate when the filling level of said bucket assumes a non-zero value lower that its maximum filling level, and, in the case of not very active scenes, either to the leakage rate of said leaky bucket when the filling level of the bucket is zero, or to the open-loop rate when the filling level of the bucket is equal to the maximum filling level of said bucket, or to a value between the leakage rate and the open-loop rate when the filling level of said bucket assumes a non-zero value lower than its maximum filling level.

3. Method according to one of the preceding claims, **characterised in that** it consists in determining the quantization parameter by calculating, in the case of active scenes, a function having as a variable the filling level of the leaky bucket and, as a parameter, the leakage rate of said bucket, the maximum filling level of said bucket and a predetermined quantization parameter, and, in the case of not very active scenes, calculating another function having the same variables and the same parameters.

4. Method according to claim 1 or 2, **characterised in that** it consists in determining the quantization parameter so that the output rate of the coder is equal, in the case of active scenes, to the result of the calculation of a continuous decreasing function f having as a variable the filling level of the leaky bucket which assumes a value equal to the open-loop rate for a zero value of the filling level of the bucket, a value equal to the leakage rate of said leaky bucket for a value of the filling level of the bucket equal to the maximum filling level of said bucket, and a value between the open-loop rate and the leakage rate for intermediate values of the filling level and, in the case of not very active scenes, to the result of the calculation of a continuous decreasing function g having as a variable the filling level of the leaky bucket which assumes a value equal either to the leakage rate of said leaky bucket for a zero value of the filling level, a value equal to the open-loop rate for a value of the filling level of the bucket equal to the maximum filling level of said bucket, and values between the leakage rate and the open-loop rate for intermediate values of the filling rate.

5. Method according to claim 4, **characterised in that** it consists in determining the quantization parameter by calculating the following functions:

   a) in the case of active scenes:

$$Q(i+ 1) = Qo \times Go(i)/f$$

   b) in the case of not very active scenes:

$$Q(i+ 1) = Qo \times Go(i)/g$$

6. Method according to one of claims 4 or 5, **characterised in that** the function f has a derivative of values which decrease with the filling level of the bucket and the function g has a derivative of values which decrease with the filling level of the bucket.

7. Method according to claim 6, **characterised in that** the function f is written:

$$f = G_o(i).(1 - \varepsilon_1(x)) + \lambda.\varepsilon_1(x)$$

and function g is written:

$$g = \lambda.(1 - \varepsilon_2(x)) + G_o(i).\varepsilon_2(x)$$

FIG.1

FIG.2

$$G_0(i) \leq \lambda \qquad\qquad G_0(i) \geq \lambda$$

## FIG. 3

## FIG. 4

FIG.5

FIG.6